# EUROPEAN PATENT SPECIFICATION

(11) **EP 4 105 117 B1**
(45) Date of publication and mention of the grant of the patent: **09.07.2025**
(21) Application number: 20918852.3
(22) Date of filing: 09.03.2020
(51) Int. Cl.: B63B 77/10, B63B 43/06, F03D 13/40, F03D 13/25, F03D 13/20, B63B 35/44, B63B 1/12

(54) **TRANSPORT DEVICE FOR TRANSPORTING UPPER TOWER OF FLOATING WIND POWER GENERATOR**
TRANSPORTVORRICHTUNG ZUM TRANSPORTIEREN DES OBEREN TURMS EINES SCHWIMMENDEN WINDKRAFTGENERATORS
DISPOSITIF DE TRANSPORT POUR TRANSPORTER UNE TOUR SUPÉRIEURE D'UN GÉNÉRATEUR D'ÉNERGIE ÉOLIENNE FLOTTANT

(30) Priority: 11.02.2020 KR 20200016639
(43) Date of publication of application: 21.12.2022
(73) Proprietor: Kepco Engineering & Construction Company, Inc., Gimcheon-si Gyeongsangbuk-do 39660 (KR)
(72) Inventor: YOUN, Young Jong, Yongin-si, Gyeonggi-do 16916 (KR); KIM, Jong Kill, Yongin-si, Gyeonggi-do 16802 (KR); KIM, Joo Young, Goyang-si Gyeonggi-do 10361 (KR); JEON, Chul Kyoo, Gimcheon-si, Gyeongsangbuk-do 39660 (KR)
(74) Representative: J A Kemp LLP
(86) International application number: PCT/KR2020/003275
(87) International publication number: WO 2021/162169

(56) References cited:
- EP-A1- 2 776 634
- EP-A1- 3 456 960
- EP-A1- 3 526 411
- JP-A- 2012 107 586
- JP-A- 2012 201 219
- KR-A- 20160 016 390
- KR-A- 20190 128 432
- KR-B1- 101 407 431
- US-A1- 2008 240 864

## Description

### TECHNICAL FIELD

The present disclosure relates to a transport device for transporting an upper tower of a floating wind power generator, and more particularly, to a transport device for transporting an upper tower of a floating wind power generator, which facilitates transport of and simplifies maintenance of the upper tower of a floating wind power generator by separating the upper tower to which blades are coupled.

### BACKGROUND ART

A stationary offshore wind power generator is installed at a shallow water level of about 50 m due to the technical limitations of an installation vessel. In other words, the stationary offshore wind power generator may be installed only in the sea near the land. A floating offshore wind power generator is being attempted to overcome such shortcomings and secure economic efficiency.

The floating offshore wind power generator may be installed in an economically efficient manner even at a deep water level of up to about 300 m by using a floating body that floats and supports a wind power generator, and a mooring device for fixing the floating body to the seabed. The floating offshore wind power generator may secure a large area of use in the sea for wind power generation and may also obtain a stable output by effectively using a strong wind speed of the distant sea.

Various types of floating offshore wind power generators have been attempted. In detail, spar type, semi-submersible type, and tension legged platform (TLP) type floating offshore wind power generators are used depending on the type of the floating body. Each type has its own advantages but causes a major problem when inspection or repair of the wind power generator is required.

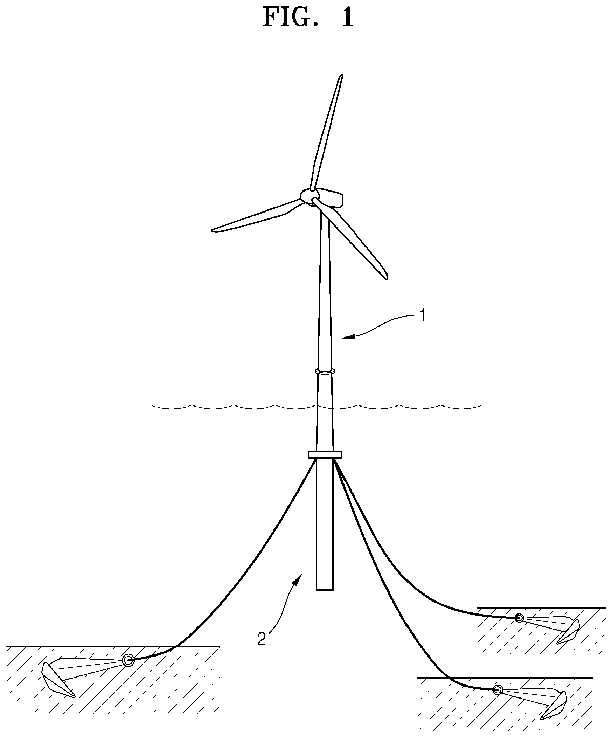

Referring to FIGS. 1 to 3, in order to integrally transport a wind power generator and floating bodies 2, 3, and 4 for floating the wind power generator to the adjacent sea, an anchor device coupled to the floating bodies 2, 3, and 4 and a seabed cable for transmission of generated power need to be disassembled, which may cause inconvenience, and each type has the following additional problems.

As shown in FIG. 1, the spar type floating offshore wind power generator has the floating body 2 manufactured in the form of a stick, and has a simple structure and thus is easy to manufacture. However, because the floating body 2 is installed in the water up to about 100 m, it is impossible to move the spar type floating offshore wind power generator to a relatively shallow port, such that maintenance needs to be performed in a deep water area, and inspection or repair, including disassembly or assembly, needs to be carried out in weather conditions where the wave height is not high, by mobilizing an expensive dynamic positioning vessel, etc.

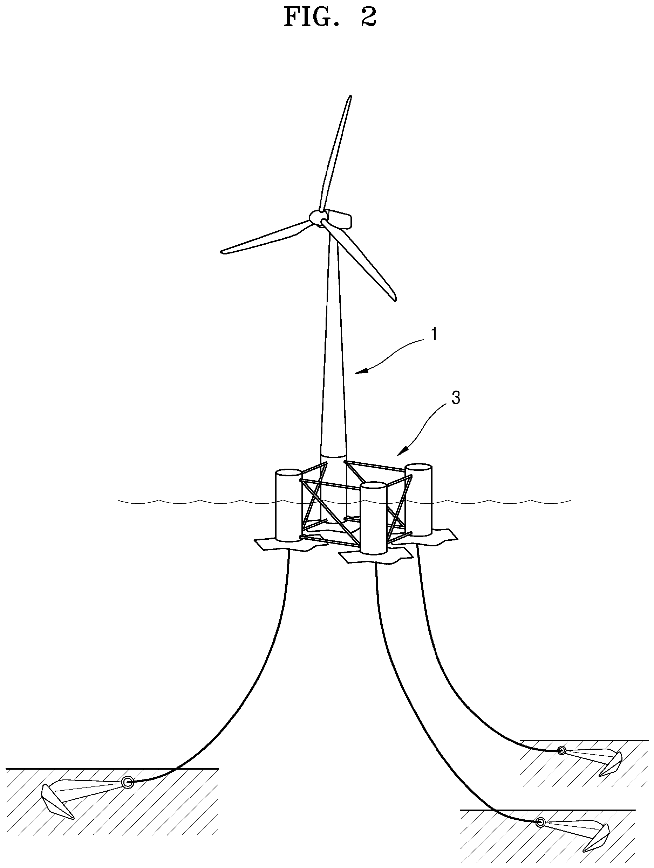

As shown in FIG. 2, in the case of the semi-submersible type floating offshore wind power generator, the floating body 3 that floats a tower part 1 is installed in a semi-submersible manner. Accordingly, because the floating body 3 to which the tower part 1 is coupled may be moved to a shallow water level, maintenance is relatively easy. However, as shown in FIG. 2, in the semi-submersible type floating offshore wind power generator, for example, ballast tanks are respectively installed at vertexes of a rectangular structure, and the tower part 1 is installed on any one of the ballast tanks. Accordingly, due to a structure in which the floating body 3 is greatly affected by waves, even in a normal operation state, shaking of the tower part 1 is relatively large. In order to overcome the problems described above, it is necessary to introduce an expensive active ballast system to adjust the verticality of the tower part 1. However, despite the active ballast system, there is a limit in reducing the shaking of the tower part 1, and strong shaking affects the strength or lifetime of the tower part 1.

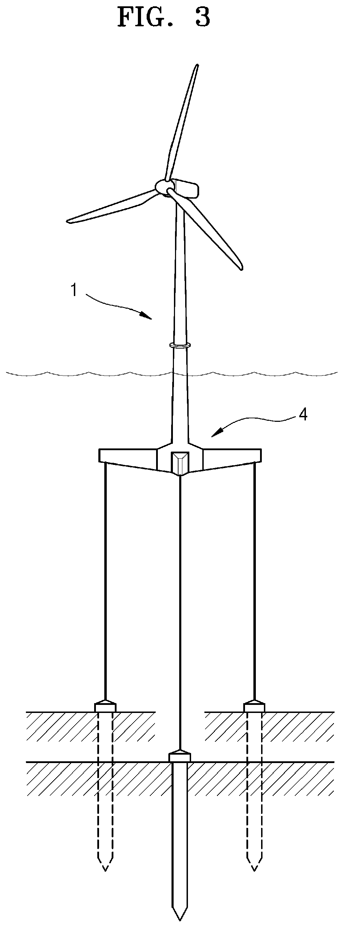

As shown in FIG. 3, the TLP type floating offshore wind power generator has a relatively simple structure of the floating body 4 but has relatively low stability in maintaining a strong tensile force by firmly fixing a chain or wire vertically to the seabed at a deep water level, and thus, when the chain or wire vertically connected for transport of the tower part 1 is removed, there is a risk that the tower part 1 may overturn during movement by strong waves or wind. EP 3,526,411 discloses background art.

### DESCRIPTION OF EMBODIMENTS

### TECHNICAL PROBLEM

The present disclosure has been devised to solve the above-described needs, and provides a transport device for transporting an upper tower of a floating wind power generator, which facilitates transport and simplifies maintenance of the upper tower of a floating wind power generator by separating the upper tower to which blades are coupled.

### SOLUTION TO PROBLEM

The invention is defined in the independent claim. Further aspects and preferred embodiments are defined in the dependent claims. Any aspects, embodiments and examples of the present disclosure which do not fall under the scope of the appended claims do not form part of the invention and are merely provided for illustrative purposes.

According to an embodiment of the present disclosure, a transport device for transporting an upper tower of a floating wind power generator, in which the floating wind power generator includes the upper tower to which blades are coupled, and a lower tower detachably coupled to a lower side of the upper tower, includes a support body configured to support the upper tower separated from the lower tower, and a floating body to which the support body is coupled, the floating body floating on the water surface, a coupling flange coupled to the support body is formed to protrude from an outer circumferential surface of the upper tower, the support body is coupled to the upper tower by surrounding the outer circumferential surface of the upper tower and an upper side of the support body is coupled to the coupling flange, wherein the support body comprises a first support, a second support, and a third support, the first support fixed to the floating body and covering a portion of the outer circumferential surface of the upper tower; the second support rotatably coupled to one side of the first support and covering other portions of the outer circumferential surface of the upper tower; and the third support rotatably coupled to another side of the first support and covering a remaining portion of the outer circumferential surface of the upper tower, the first support, the second support, and the third support have bolt holes formed at locations corresponding to bolt holes of the coupling flange, respectively, wherein the second and third supports rotate with respect to the first support, such that the upper tower is inserted into the second and third supports, and when the upper tower is inserted into the second and third supports, the second and third supports rotate with respect to the first support, such that the second and third supports are detachably coupled to each other, wherein the upper tower is coupled to and supported on the support body and is transportable together with the floating body.

In addition, the transport device may further include a worker platform provided on a lower side of the support body.

In addition, the floating body may include a plurality of ballast tanks, considering a virtual N-gonal structure, where N is a natural number greater than or equal to 3 (N≥3), having each ballast tank as a vertex, a fixing structure may connect and fix the ballast tanks to each other is arranged, the fixing structure may be provided on (N-1) sides of the N-gonal structure, and one remaining side may form an open region in an open state, and the upper tower may approach the open region and be fastened to the support body.

In addition, the worker platform may include a fixing guide part fixed to the floating body, wherein one end and another end of the fixing guide part are spaced apart from each other and form a certain open region, and a sliding part coupled to the fixing guide part to be slidable along the fixing guide part, and configured to selectively open and close the certain open region.

In addition, the support body may be provided inside the virtual N-gonal structure.

### ADVANTAGEOUS EFFECTS OF DISCLOSURE

According to the present disclosure, in a transport device for transporting an upper tower of a floating wind power generator, for maintenance, the upper tower to which blades are coupled is coupled to a support body, and a floating body for transport, to which the support body is coupled, may be transported to a port of a low water level, and thus, the upper tower may be safely and quickly transported, and inspection, repair and maintenance of the upper tower including the blades may be quickly carried out.

Also, the operational reliability is improved due to the simplification of installation, operation and repair of a floating wind power generator, the lifetime of the wind power generator may be extended, and the cost for installation and maintenance is significantly reduced.

In addition, according to the present disclosure, because an upper tower may be transported to the distant sea by using a floating body, installation of a floating wind power generator is simplified, such that the cost for installation and operation may be reduced.

### BRIEF DESCRIPTION OF DRAWINGS

FIGS. 1 to 3 are schematic diagrams illustrating existing offshore floating wind power generators.
FIG. 4 illustrates a tower part according to an embodiment of the present disclosure.
FIG. 5 is an enlarged view of a main part of FIG. 4.
FIG. 6 illustrates a floating body to which a support body is coupled, according to an embodiment of the present disclosure.
FIG. 7 illustrates an open state of a support body.
FIG. 8 is a plan view of a support body.
FIG. 9 is a cross-sectional view taken along a line A-A of FIG. 6.
FIG. 10 illustrates an open state of a worker platform.
FIG. 11 illustrates a closed state of a worker platform.

### MODE OF DISCLOSURE

Hereinafter, embodiments according to the present disclosure will be described in detail with reference to the accompanying drawings.

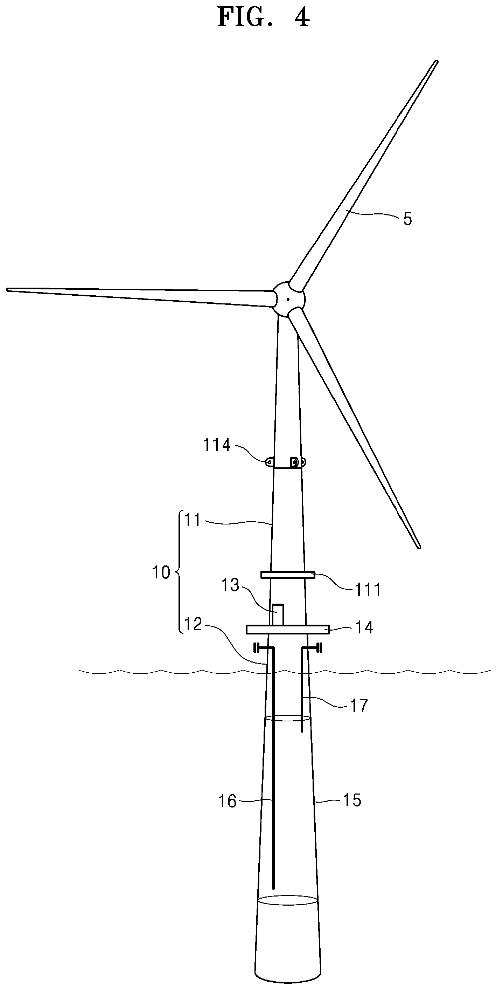

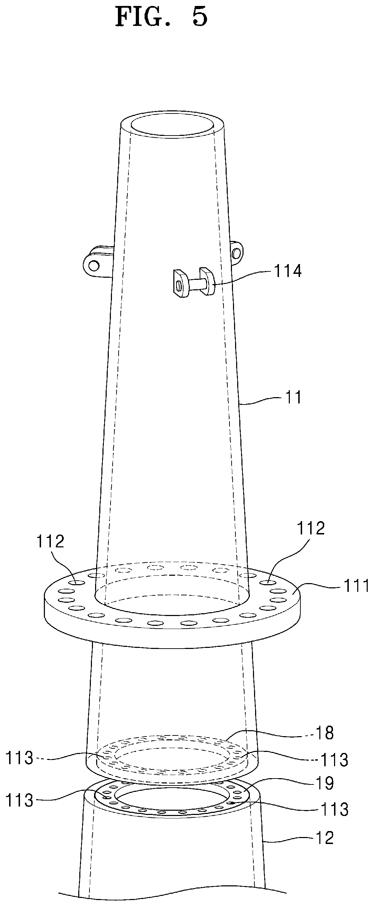

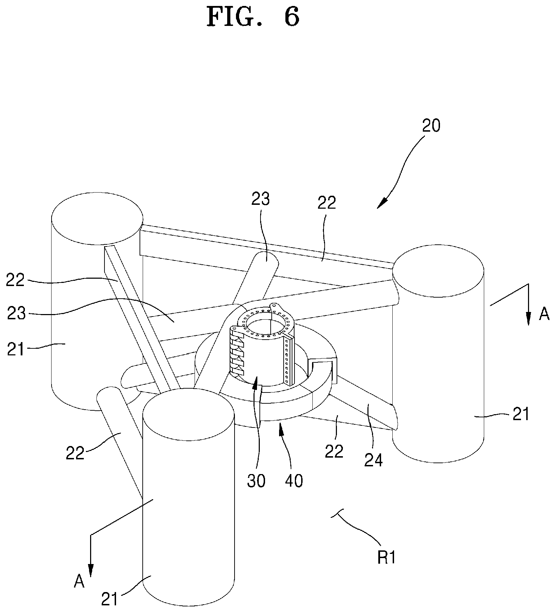

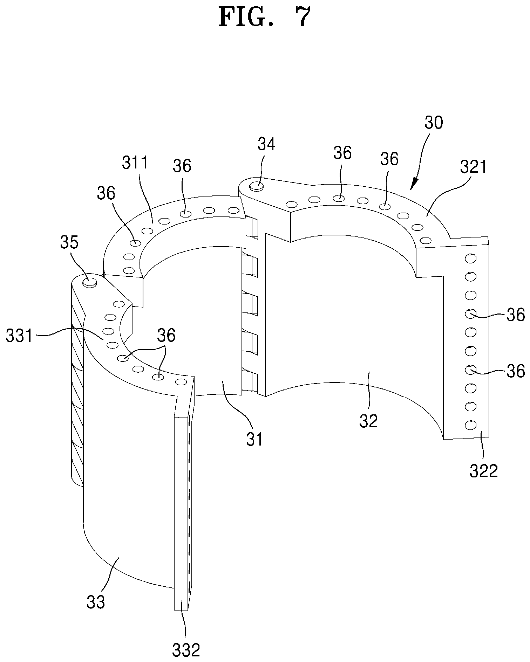

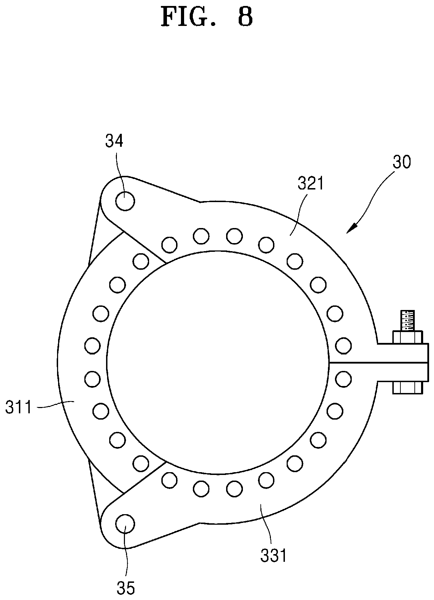

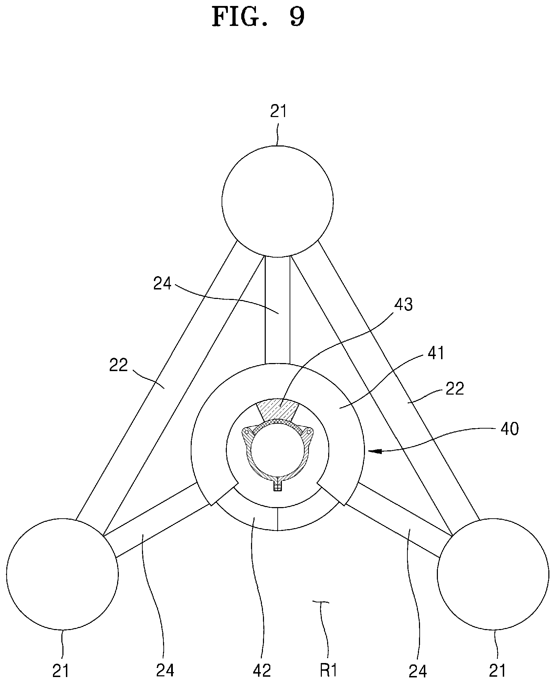

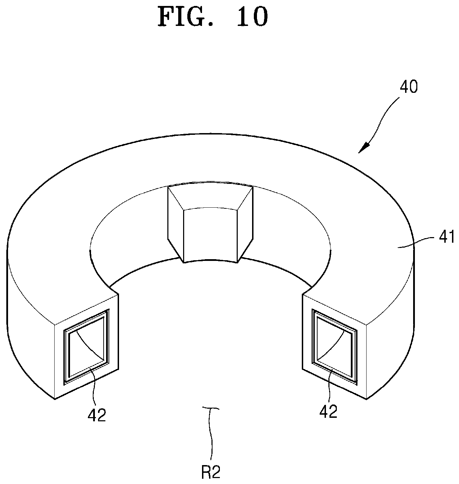

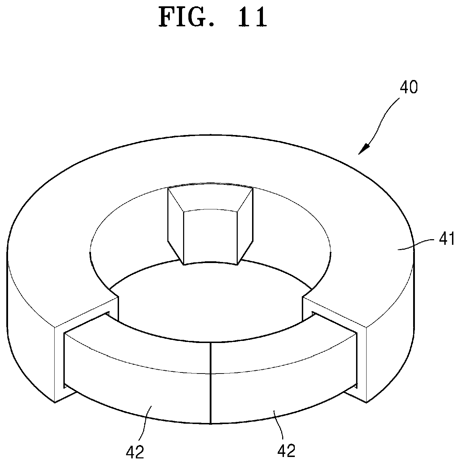

FIG. 4 illustrates a tower part according to an embodiment of the present disclosure, and FIG. 5 is an enlarged view of a main part of FIG. 4. FIG. 6 illustrates a floating body to which a support body is coupled, according to an embodiment of the present disclosure, FIG. 7 illustrates an open state of the support body, and FIG. 8 is a plan view of the support body. FIG. 9 is a cross-sectional view taken along a line A-A of FIG. 6. FIG. 10 illustrates an open state of a worker platform, and FIG. 11 illustrates a closed state of the worker platform.

According to an embodiment of the present disclosure, a transport device for transporting an upper tower of a floating wind power generator, in which the floating wind power generator includes an upper tower 11 to which blades are coupled, and a lower tower 12 detachably coupled to the lower side of the upper tower 11, relates to a device for transporting the upper tower 11 for maintenance of the upper tower 11.

In particular, in order to improve economic efficiency, floating wind power generators that have been recently installed in the sea are increased in size and are significantly high (about 100 m or more), and when a major failure occurs in a blade, a gearbox, a power generator, or a converter, a wind power generator and a floating body that floats the wind power generator need to be simultaneously lifted for inspection or repair. According to the present disclosure, proposed is a transport device for separating and transporting the upper tower 11 to which blades are coupled.

First, in the floating wind power generator, a tower part 10 including the upper tower 11 and the lower tower 12 is described.

The tower part 10 is a column vertically erected so that blades may be coupled to the upper side thereof, and as shown in FIG. 4, the tower part 10 includes the upper tower 11 to which the blades are coupled, and the lower tower 12 detachably coupled to the upper tower 11. Various mechanical devices, such as a gearbox for rotating the blades, are installed in the tower part 10. Because pieces of mechanical equipment for driving and installing the blades are not directly related to the present disclosure, a detailed description thereof will be omitted.

As shown in FIG. 5, the blades are coupled to the upper side of the upper tower 11, and a lug device 114 for lifting the upper tower 11 is formed in the middle of the upper tower 11 to protrude outward. A coupling flange 111 is formed on the lower side of the upper tower 11 to be coupled with a support body 30 for supporting the tower part 10. The coupling flange 111 is formed to protrude from the outer circumferential surface of the upper tower 11. A bolt hole 112 for coupling with the support body 30 is formed in the coupling flange 111.

An upper inner fastening part 18 is provided at a lower portion of the upper tower 11. The upper inner fastening part 18 is formed to protrude from the inner circumferential surface of the upper tower 11 and is coupled to an upper portion of the lower tower 12. As shown in FIG. 4, a door 13 is formed between the upper inner fastening part 18 and the coupling flange 111 so that a worker may enter and exit the tower part 10.

The worker may work on a platform 14 provided on the lower side of the door 13 to protrude from the outer circumferential surface of the upper tower 11. However, in FIG. 5, the door 13 and the platform 14 are omitted for convenience of description.

The lower tower 12 is detachably coupled to the upper tower 11. In detail, a lower inner fastener 19 is provided on the upper side of the lower tower 12. The lower inner fastener 19 is formed to protrude from the inner circumferential surface of the lower tower 12 and is bolted to the upper inner fastening part 18. A bolt hole 113 is formed in the upper inner fastening part 18 and the lower inner fastener 19.

According to the present embodiment, a ballast tank 15 for adjusting buoyancy is coupled to the lower side of the lower tower 12. According to the present embodiment, the ballast tank 15 is provided to adjust buoyancy when the upper tower 11 is separated from the lower tower 12. A water supply pipe 16 and a water discharge pipe 17 are installed in the ballast tank 15 to supply and discharge water.

According to an embodiment of the present disclosure, in the transport device for transporting the upper tower of the floating wind power generator, the upper tower 11 separated from the lower tower 12 may be coupled to the support body 30 and supported, and may be transported together with a floating body 20 for transport. According to the present embodiment, the transport device includes the floating body 20 and the support body 30.

The floating body 20 provides buoyancy to enable floating on the water surface. The support body 30 is coupled to the floating body 20, and the upper tower 11 is supported on the support body 30. Accordingly, the floating body 20 allows the support body 30, to which the upper tower 11 is coupled, to stably float on the water surface.

As shown in FIG. 6, the floating body 20 includes a plurality of ballast tanks 21 and a fixing structure 22.

A ballast tank 21 is provided in plural and is provided at a point corresponding to each vertex of a polygonal structure. According to an embodiment of the present disclosure, three ballast tanks 21 are provided. However, the number of ballast tanks 21 is not limited thereto.

The fixing structure 22 is provided to connect and fix the ballast tanks 21 to each other. Considering a virtual N-gonal structure, where N is a natural number greater than or equal to 3 (N≥3), having the ballast tanks 21 as vertexes, the fixing structure 22 connects and fixes the ballast tanks 21 to (N-1) sides of the N-gonal structure to each other. In addition, one remaining side forms an open region R1 in an open state.

According to an embodiment of the present disclosure, with respect to the ballast tanks 21 arranged at the respective vertexes of a triangular structure, the fixing structure 22 is arranged on two sides, such that while the ballast tanks 21 on both sides are connected to each other, one remaining side is open without the fixing structure 22 being arranged thereon.

According to an embodiment of the present disclosure, the ballast tanks 21 facing the fixing structure 22 are connected to each other by a connection member 23. According to the present embodiment, three ballast tanks 21 are provided, and two connection members 23 are provided.

The open region R1 is provided to allow the upper tower 11 to approach the support body 30. That is, after the upper tower 11 is separated from the lower tower 12, the upper tower 11 is coupled to the support body 30 through the open region R1.

Also, after inspection or repair of the upper tower 11 is completed, in order to fasten the upper tower 11 to the lower tower 12 again, the upper tower 11 is pulled out through the open region R1 when the upper tower 11 is separated from the support body 30.

The support body 30 supports the upper tower 11 separated from the lower tower 12. According to the present embodiment, the support body 30 is coupled to the upper tower 11 by surrounding the outer circumferential surface of the upper tower 11, the upper side of the support body 30 being coupled to the coupling flange 111. Also, according to the present embodiment, the support body 30 is provided inside the virtual N-gonal structure formed by the ballast tanks 21 of the floating body 20.

In detail, the support body 30 includes a first support 31, a second support 32, and a third support 33.

The first support 31 is fixed to the floating body 20 and surrounds a portion of the outer circumferential surface of the upper tower 11. According to the present embodiment, the first support 31 is fixed to the connection member 23 supporting the floating body 20. The first support 31 may be fixed by using a structure separate from the floating body 20.

A first flange coupling part 311 coupled to the coupling flange 111 formed in the upper tower 11 is provided on the upper surface of the first support 31. A bolt hole 36 is formed in the first flange coupling part 311 at a location corresponding to the bolt hole 112 of the coupling flange 111.

The second support 32 is rotatably coupled to one side of the first support 31 and surrounds a portion of the outer circumferential surface of the upper tower 11. The second support 32 rotates with respect to the first support 31 around a first hinge part 34.

A second flange coupling part 321 fastened to the coupling flange 111 formed in the upper tower 11 is provided on the upper surface of the second support 32. Similar to the first flange coupling part 311, a bolt hole 36 is formed in the second flange coupling part 321 at a location corresponding to the bolt hole 112 of the coupling flange 111.

The third support 33 is rotatably coupled to the other side of the first support 31 and surrounds a remaining portion of the upper tower 11. The third support 33 rotates with respect to the first support 31 around a second hinge part 35.

A third flange coupler 331 fastened to the coupling flange 111 formed in the upper tower 11 is provided on the upper surface of the third support 33. Similar to the first flange coupling part 311, a bolt hole 36 is formed in the third flange coupler 331 at a location corresponding to the bolt hole 112 of the coupling flange 111.

When the second and third supports 32 and 33 rotate with respect to the first support 31, and accordingly, inner portions thereof are open, the upper tower 11 is inserted into the inner portions thereof. After the upper tower 11 is inserted into the inner portions of the second and third supports 32 and 33, the second and third supports 32 and 33 rotate with respect to the first support 31 again and thus are detachably coupled to each other. Ribs 322 and 332 having a bolt hole 36 is formed at each end of the second and third supports 32 and 33, and after the second and third supports 32 and 33 are rotated so that the ribs 322 and 332 are in contact with each other, the ribs 322 and 332 are fastened to each other by bolts.

According to the present embodiment, the transport device for transporting the upper tower of the floating wind power generator further includes a worker platform 40.

The worker platform 40 is provided on the lower side of the support body 30 to secure a work space for a worker when the upper tower 11 is fastened to the support body 30. The worker platform 40 includes a fixing guide part 41 and a sliding part 42.

The fixing guide part 41 is fixed to the floating body 20, and one end and the other end of the fixing guide part 41 are spaced apart from each other and form a certain open space R2. As shown in FIG. 9, the fixing guide part 41 is supported by a support member 24. One end of the support member 24 is coupled to the fixing guide part 41, and the other end of the support member 24 is coupled to the ballast tank 21. An arrangement of the support member 24 may be appropriately changed in design and may be applied in various manners.

As shown in FIG. 10, the fixing guide part 41 may be formed in a ring shape, and the worker may operate on the upper surface of the fixing guide part 41. A fastener 43 fastened to the support body 30 is provided at the center of the fixing guide part 41. The ring-shaped fixing guide part 41 has an open portion corresponding to an arc of a certain length, and the open space R2 is provided as a space in which the upper tower 11 may move inward and outward.

The sliding part 42 is coupled to the fixing guide part 41 to be slidable along the fixing guide part 41. The sliding part 42 selectively opens and closes the certain open space R2 provided in the fixing guide part 41. According to the present embodiment, the sliding part 42 is inserted into the fixing guide part 41 and is coupled to the fixing guide part 41 to be introduced into or withdrawn from the fixing guide part 41.

When the sliding part 42 is slid in a direction exposed from the fixing guide part 41, the open space R2 is closed, and when the sliding part 42 is inserted into the fixing guide part 41, the open space R2 is open. The introduction and withdrawal of the sliding part 42 with respect to the fixing guide part 41 may be implemented by using a known component, such as a motor, a gear, or the like.

Hereinafter, operations or effects of the transport device for transporting the upper tower of the floating wind power generator according to the above-described configuration are described in detail.

According to an embodiment of the present disclosure, the transport device for transporting the upper tower of the floating wind power generator is used when the upper tower 11 is transported to a sea area near the land to repair or fix a wind power generator that floats on the sea and generates power. The floating wind power generator may be in a spar type, a semi-submersible type, or a TLP type and may maintain a floating state in the sea.

According to the present embodiment, in the floating wind power generator, the tower part 10 includes the upper tower 11 and the lower tower 12, which are detachably coupled to each other, and the coupling flange 111 is formed on the upper tower 11, to which the blades are coupled, for coupling with the support body 30 provided in the transport device.

As shown in FIGS. 4 and 5, the upper tower 11 is separated from the lower tower 12. In this case, the lower tower 12 of the floating wind power generator maintains a floating state in the sea as it is. FIG. 4 illustrates a spar type floating wind power generator, in which the lower tower 12 maintains a state anchored in the sea by an anchor device. However, in FIG. 4, the anchor device is omitted. Even in a semi-submersible type or TLP type floating wind power generator, the coupling flange 111 is provided on the upper tower 11, and the upper tower 11 is separated from the lower tower 12, such that the upper tower 11 may be transported by using the transport device according to the present disclosure.

The separated upper tower 11 is firmly fixed to the floating body 20 by a wire through the lug device 114 so that the upper tower 11 is connected to the support body 30 and then may be stably transported without shaking. The support body 30 and the worker platform 40, which are provided in the floating body 20, is open so that the upper tower 11 may be moved thereinto. That is, the sliding part 42 of the worker platform 40 is inserted into the fixing guide part 41 and forms the open space R2.

Also, the second and third supports 32 and 33 are open by rotating with respect to the first support 31, and accordingly, the support body 30 enables the upper tower 11 to be introduced thereinto. The ballast tank 21 provided in the floating body 20 adjusts buoyancy to facilitate approach of the upper tower 11.

When the upper tower 11 is introduced into the support body 30, the second and third supports 32 and 33 rotate again, and ribs 322 and 332 are fastened to each other by bolts. The worker platform 40 is slid so that the sliding part 42 protrudes from the fixing guide part 41, and closes the open space R2.

Subsequently, in a state in which the upper tower 11 is coupled to the support body 30, the floating body 20 is towed and moved to a nearby sea, such that inspection or maintenance of the upper tower 11 may be carried out.

As described above, in the transport device for transporting the upper tower of the floating wind power generator according to the present embodiments of the disclosure, while a series of components for floating and fixing an existing wind power generator, which is installed to float on the sea level, are left at installation locations as they are, only the upper tower 11 may be separated and transported, and thus, maintenance and repair of the wind power generator are facilitated, such that the cost for operation and repair of the wind power generator may be significantly reduced.

Also, according to an embodiment of the present disclosure, by forming one side of the floating body 20 as an open region R1, approach of the upper tower 11 may be facilitated, and the support body 30 and the worker platform 40 form an open region that is selectively open and closed so that the upper tower 11 may be introduced thereinto, and thus, with a simplified structure, the upper tower 11 may be quickly combined and disassembled.

In addition, the support body 30 and the worker platform 40 are arranged at the center of the floating body 20, such that the upper tower 11 may be stably transported.

The embodiments of the present disclosure have been described in detail, but the disclosure is not limited to the above embodiments, and various modifications may be provided within the scope of the present disclosure.

## Claims

1. A transport device for transporting an upper tower (11) of a floating wind power generator, wherein the floating wind power generator comprises the upper tower (11) to which blades are coupled, and a lower tower (12) detachably coupled to a lower side of the upper tower (11), the transport device comprising:
a support body (30) configured to support the upper tower (11) separated from the lower tower; and
a floating body (20) to which the support body (30) is coupled, the floating body (20) floating on the water surface,
and a coupling flange (111) coupled to the support body (30) is formed to protrude from an outer circumferential surface of the upper tower (11),
the support body (30) is coupled to the upper tower (11) by surrounding the outer circumferential surface of the upper tower (11) and an upper side of the support body (30) is coupled to the coupling flange (111),
wherein the support body (30) comprises a first support (31), a second support (32), and a third support (33),
the first support (31) fixed to the floating body (20) and covering a portion of the outer circumferential surface of the upper tower (11);
the second support (32) rotatably coupled to one side of the first support (31) and covering other portions of the outer circumferential surface of the upper tower (11); and
the third support (33) rotatably coupled to another side of the first support (31) and covering a remaining portion of the outer circumferential surface of the upper tower (11),
the first support (31), the second support (32), and the third support (33) have bolt holes (36) formed at locations corresponding to bolt holes (112) of the coupling flange (111), respectively,
wherein the second and third supports (32,33) rotate with respect to the first support (31), such that the upper tower (11) is inserted into the second and third supports (32,33), and when the upper tower (11) is inserted into the second and third supports (32,33), the second and third supports (32,33) rotate with respect to the first support (31), such that the second and third supports (32,33) are detachably coupled to each other,
wherein the upper tower (11) is coupled to and supported on the support body (30) and is transportable together with the floating body.

2. The transport device of claim 1, further comprising a worker platform (40) provided on a lower side of the support body (30).

3. The transport device of claim 1, wherein the floating body (20) comprises a plurality of ballast tanks,
considering a virtual N-gonal structure, where N is a natural number greater than or equal to 3 (N≥3), having each ballast tank as a vertex, a fixing structure for connecting and fixing the ballast tanks to each other is arranged, the fixing structure is provided on (N-1) sides of the N-gonal structure, and one remaining side forms an open region in an open state, and
the upper tower (11) approaches the open region and is fastened to the support body (30).

4. The transport device of claim 2, wherein the worker platform (40) comprises:
a fixing guide (41) part fixed to the floating body (20), wherein one end and another end of the fixing guide part (40) are spaced apart from each other and form a certain open region; and
a sliding part (42) coupled to the fixing guide part (41) to be slidable along the fixing guide part (41), and configured to selectively open and close the certain open region.

5. The transport device of claim 3, wherein the support body (30) is provided inside the virtual N-gonal structure.

## Patentansprüche

1. Transportvorrichtung zum Transportieren eines oberen Turms (11) eines schwimmenden Windkraftgenerators, wobei der schwimmende Windkraftgenerator den oberen Turm (11), an den Flügel gekoppelt sind, und einen unteren Turm (12), der abnehmbar an eine Unterseite des oberen Turms (11) gekoppelt ist, umfasst, wobei die Transportvorrichtung umfasst:
einen Stützkörper (30), der dafür konfiguriert ist, den oberen Turm (11) getrennt von dem unteren Turm zu stützen; und
einen Schwimmkörper (20), an den der Stützkörper (30) gekoppelt ist, wobei der Schwimmkörper (20) auf der Wasseroberfläche schwimmt,
und
wobei ein Kopplungsflansch (111), der mit dem Stützkörper (30) gekoppelt ist, so gebildet ist, dass er von einer äußeren Umfangsfläche des oberen Turms (11) vorsteht,
wobei der Stützkörper (30) mit dem oberen Turm (11) gekoppelt ist, indem er die äußere Umfangsfläche des oberen Turms (11) umgibt, und eine Oberseite des Stützkörpers (30) mit dem Kopplungsflansch (111) gekoppelt ist,
wobei der Stützkörper (30) einen ersten Träger (31), einen zweiten Träger (32) und einen dritten Träger (33) umfasst,
wobei die erste Stütze (31) an dem Schwimmkörper (20) befestigt ist und einen Teil der äußeren Umfangsfläche des oberen Turms (11) abdeckt;
wobei die zweite Stütze (32) drehbar mit einer Seite der ersten Stütze (31) gekoppelt ist und andere Teile der äußeren Umfangsfläche des oberen Turms (11) abdeckt; und
wobei die dritte Stütze (33) drehbar mit einer anderen Seite der ersten Stütze (31) gekoppelt ist und einen verbleibenden Teil der äußeren Umfangsfläche des oberen Turms (11) abdeckt,
wobei die erste Stütze (31), die zweite Stütze (32) und die dritte Stütze (33) Bolzenlöcher (36) aufweisen, die an Stellen gebildet sind, die jeweils den Bolzenlöchern (112) des Kopplungsflansches (111) entsprechen,
wobei die zweite und die dritte Stütze (32, 33) sich in Bezug auf die erste Stütze (31) drehen, so dass der obere Turm (11) in die zweite und die dritte Stütze (32, 33) eingesetzt wird, und wenn der obere Turm (11) in die zweite und dritte Stütze (32, 33) eingesetzt ist, sich die zweite und dritte Stütze (32, 33) in Bezug auf die erste Stütze (31) drehen, so dass die zweite und dritte Stütze (32, 33) lösbar miteinander gekoppelt sind,
wobei der obere Turm (11) mit dem Stützkörper (30) gekoppelt und an diesem abgestützt ist und zusammen mit dem Schwimmkörper transportierbar ist.

2. Transportvorrichtung nach Anspruch 1, die ferner eine Arbeitsplattform (40) umfasst, die an einer Unterseite des Stützkörpers (30) vorgesehen ist.

3. Transportvorrichtung nach Anspruch 1, wobei der Schwimmkörper (20) eine Vielzahl von Ballasttanks umfasst,
unter Berücksichtigung einer virtuellen N-eckigen Struktur, wobei N eine natürliche Zahl größer oder gleich 3 (N ≥ 3) ist, mit jedem Ballasttank als Scheitelpunkt, wobei eine Befestigungsstruktur zum Verbinden und Befestigen der Ballasttanks untereinander ausgelegt ist, wobei die Befestigungsstruktur an (N-1) Seiten der N-eckigen Struktur vorgesehen ist, und eine verbleibende Seite einen offenen Bereich in einem offenen Zustand bildet, und
wobei der obere Turm (11) sich dem offenen Bereich nähert und an dem Stützkörper (30) befestigt ist.

4. Transportvorrichtung nach Anspruch 2, wobei die Arbeitsplattform (40) umfasst:
eine Befestigungsführung (41), die an dem Schwimmkörper (20) befestigt ist, wobei ein Ende und ein anderes Ende des Befestigungsführungsteils (40) voneinander beabstandet sind und einen bestimmten offenen Bereich bilden; und
ein Gleitteil (42), das mit dem Befestigungsführungsteil (41) gekoppelt ist, um entlang des Befestigungsführungsteils (41) verschiebbar zu sein, und dafür konfiguriert ist, den bestimmten offenen Bereich selektiv zu öffnen und zu schließen.

5. Transportvorrichtung nach Anspruch 3, wobei der Stützkörper (30) innerhalb der virtuellen N-eckigen Struktur vorgesehen ist.

## Revendications

1. Dispositif de transport pour transporter une tour supérieure (11) d'un générateur d'énergie éolienne flottant, dans lequel le générateur d'énergie éolienne flottant comprend la tour supérieure (11) à laquelle des pales sont accouplées, et une tour inférieure (12) accouplée de façon détachable à un côté inférieur de la tour supérieure (11), le dispositif de transport comprenant :
un corps de support (30) conçu pour supporter la tour supérieure (11) séparée de la tour inférieure, et
un corps flottant (20) auquel le corps de support (30) est accouplé, le corps flottant (20), flottant à la surface de l'eau, et
une bride d'accouplement (111) accouplée au corps de support (30) est formée pour faire saillie à partir d'une surface circonférentielle externe de la tour supérieure (11),
le corps de support (30) est accouplé à la tour supérieure (11) en entourant la surface circonférentielle externe de la tour supérieure (11) et un côté supérieur du corps de support (30) est accouplé à la bride d'accouplement (111),
le corps de support (30) comprenant un premier support (31), un deuxième support (32), et un troisième support (33),
le premier support (31) étant fixé au corps flottant (20) et couvrant une portion de surface circonférentielle externe de la tour supérieure (11) ;
le deuxième support (32) étant accouplé de manière rotative à un côté du premier support (31) et couvrant d'autres portions de la surface circonférentielle externe de la tour supérieure (11), et
le troisième support (33) étant accouplé de manière rotative à un autre côté du premier support (31) et couvrant une portion restante de la surface circonférentielle externe de la tour supérieure (11),
le premier support (31), le deuxième support (32), et le troisième support (33), ont des trous de boulon (36) formés à des emplacements correspondants à des trous de boulon (112) de la bride d'accouplement (111), respectivement,
les deuxième et troisième supports (32, 33) tournent par rapport au premier support (31), de telle sorte que la tour supérieure (11) est insérée dans les deuxième et troisième supports (32, 33), et lorsque la tour supérieure (11) est insérée dans les deuxième et troisième supports (32, 33), les deuxième et troisième supports (32, 33) tournent par rapport au premier support (31), de telle sorte que les deuxième et troisième supports (32, 33) sont accouplés de manière détachable l'un à l'autre,
la tour supérieure (11) étant accouplée au corps de support (30) et supportée sur celui-ci, et étant transportable conjointement avec le corps flottant.

2. Dispositif de transport selon la revendication 1, comprenant en outre une plateforme pour les travailleurs (40) disposée sur un côté inférieur du corps de support (30).

3. Dispositif de transport selon la revendication 1, dans lequel le corps flottant (20) comprend une pluralité de réservoirs de ballast,
considérant une structure N-gonale virtuelle, où N est un entier naturel supérieur ou égal à 3 (N ≥ 3), ayant chaque réservoir de ballast comme sommet, une structure de fixation pour relier et fixer les réservoirs de ballast les uns aux autres est agencée, la structure de fixation est disposée sur (N-1) côtés de la structure N-gonale, et le côté restant forme une région ouverte dans un état ouvert, et
la tour supérieure (11) s'approche de la région ouverte et est attachée au corps de support (30).

4. Dispositif de transport selon la revendication 2, dans lequel la plateforme pour les travailleurs (40) comprend :
une partie guide de fixation (41) fixée au corps flottant (20), une extrémité et une autre extrémité de la partie guide de fixation (40) étant espacées l'une de l'autre et formant une certaine région ouverte ; et
une partie coulissante (42) accouplée à la partie guide de fixation (41) pour être coulissante le long de la partie guide de fixation (41), et conçue pour ouvrir et fermer sélectivement la certaine région ouverte.

5. Dispositif de transport selon la revendication 3, dans lequel le corps de support (30) est disposé à l'intérieur de la structure N-gonale virtuelle.
